(19) Europäisches Patentamt
European Patent Office
Office européen des brevets

(11) **EP 4 560 867 A1**

(12) **EUROPEAN PATENT APPLICATION**

(43) Date of publication:
**28.05.2025 Bulletin 2025/22**

(21) Application number: **24214866.6**

(22) Date of filing: **22.11.2024**

(51) International Patent Classification (IPC):
*H02J 3/32* (2006.01)    *H02J 7/00* (2006.01)

(52) Cooperative Patent Classification (CPC):
**H02J 3/32; H02J 7/007188;** H02J 2310/64

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.11.2023 CN 202311603862**

(71) Applicant: **Huawei Digital Power Technologies
Co., Ltd.
Shenzhen, Guangdong 518043 (CN)**

(72) Inventors:
• **ZHAI, Xinyuan
Shenzhen 518043 (CN)**
• **TUO, Hong
Shenzhen 518043 (CN)**

(74) Representative: **Gill Jennings & Every LLP
The Broadgate Tower
20 Primrose Street
London EC2A 2ES (GB)**

(54) **ENERGY STORAGE APPARATUS AND ENERGY STORAGE SYSTEM**

(57)    This application provides an energy storage apparatus The energy storage apparatus includes a controller and a battery pack. The battery pack is configured to store electric energy. The controller is configured to: obtain a first correspondence and a second correspondence, where the first correspondence is a correspondence between first charging information and a first electricity price period, and the second correspondence is a correspondence between second charging information and a second electricity price period; and when determining that the energy storage apparatus enters the first electricity price period, control the battery pack to be charged based on the first charging information; or when determining that the energy storage apparatus enters the second electricity price period, control the battery pack to be charged based on the second charging information. The first charging information is different from the second charging information, and the first electricity price period is different from the second electricity price period. Based on the foregoing technical solutions, different charge currents can be set for electricity price periods with different duration to implement an optimal benefit-to-life ratio of a battery.

FIG. 3

## Description

### TECHNICAL FIELD

This application relates to the field of energy technologies, and in particular, to an energy storage apparatus, a control method applied to an energy storage apparatus, and an energy storage system.

### BACKGROUND

With the advent of the global energy crisis, power supply shortage increasingly occurs in different countries and regions around the world. Through administrative, technical, and economic means, different countries and regions around the world have increased electricity prices during peak hours and implemented high and low electricity prices in different electricity hours. Peak load is transferred to valley hours through staggering electricity usage, so that power grid load that fluctuates periodically becomes more balanced. This helps improve utilization of power generation and power supply devices, reduce construction investment of the power generation and power supply devices, and optimize power resource allocation. In addition, the staggering electricity usage can improve overall efficiency and benefits of power supply, save energy, and finally reduce power consumption costs; and is of great significance to social and economic development and power consumption enterprises.

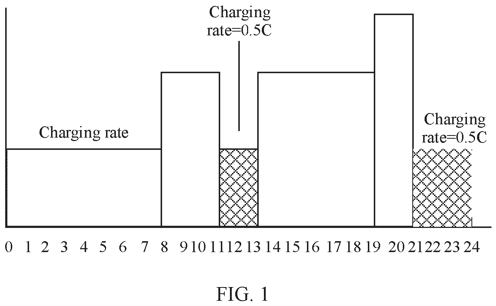

Currently, charging during off-peak hours in a fixed mode is usually used for the staggering electricity usage in the industry. To be specific, in a process of the charging during off-peak hours, a charge current limit point is uniformly set for all-day charging. As shown in FIG. 1, a same charge current limit point is set in both a time period from 11:00 to 13:00 and a time period from 22:00 to 08:00. For example, in the time period from 11:00 to 13:00, there are only two hours, and the charge current limit point is set, so that a battery is fully charged within the two hours at a charging rate of 0.5C. However, in the time period from 22:00 to 08:00, there are 10 hours, and the same charge current limit point is set, so that the battery can also be fully charged within two hours at the charging rate of 0.5C.

However, with reference to charging characteristics of the battery, a smaller charging current has less impact on a lifespan of the battery, and it is unreasonable to set a same charge current limit point for electricity price periods with different duration. Therefore, how to set different charge currents for the electricity price periods with different duration to implement an optimal benefit-to-life ratio of the battery becomes an urgent problem to be resolved.

### SUMMARY

This application provides an energy storage apparatus, so that different charge currents can be set for electricity price periods with different duration to implement an optimal benefit-to-life ratio of a battery.

According to a first aspect, an energy storage apparatus is provided. The energy storage apparatus includes a controller and a battery pack. The battery pack is configured to store electric energy. The controller is configured to: obtain a first correspondence and a second correspondence, where the first correspondence is a correspondence between first charging information and a first electricity price period, and the second correspondence is a correspondence between second charging information and a second electricity price period; and when determining that the energy storage apparatus enters the first electricity price period, control the battery pack to be charged based on the first charging information; or when determining that the energy storage apparatus enters the second electricity price period, control the battery pack to be charged based on the second charging information. The first charging information is different from the second charging information, and the first electricity price period is different from the second electricity price period.

According to the technical solutions provided in this application, the controller obtains the first correspondence and the second correspondence. When determining that the energy storage apparatus enters the first electricity price period, the controller controls the battery pack to be charged based on the first charging information corresponding to the first electricity price period; or when determining that the energy storage apparatus enters the second electricity price period, the controller controls the battery pack to be charged based on the second charging information corresponding to the second electricity price period. Therefore, different charge currents can be set for electricity price periods with different duration to implement an optimal benefit-to-life ratio of a battery.

With reference to the first aspect, in some implementations of the first aspect, the first charging information and the second charging information include any one of the following: charging rates and charging currents. Based on the foregoing technical solutions, different charge currents can be set for the electricity price periods with different duration to implement the optimal benefit-to-life ratio of the battery.

With reference to the first aspect, in some implementations of the first aspect, the first charging information is associated with duration of the first electricity price period, the second charging information is associated with duration of the second electricity price period, and the duration of the first electricity price period and the duration of the second electricity price period are in a unit of an hour. Based on the foregoing technical solutions, different charge currents can be set for the electricity price periods with different duration to implement the optimal benefit-to-life ratio of the battery.

With reference to the first aspect, in some implementations of the first aspect, when the first charging information and the second charging information include the charging rates, a first charging rate and a second charging rate meet the following conditions: $C_1 = Min(P*M, L/48V/time_1/Q)$, and $C_2 = Min(P*M, L/48V/time_2/Q)$. $Min()$ represents an operation of obtaining a minimum value, * represents a multiplication sign, $C_1$ represents the first charging rate, $P$ represents predicted discharged energy of the battery pack, $M$ represents a threshold of the battery pack, $L$ represents rated energy of the battery pack, $time_1$ represents the duration of the first electricity price period, $Q$ represents a rated capacity of the battery pack, $C_2$ represents the second charging rate, and $time_2$ represents the duration of the second electricity price period. Based on the foregoing technical solutions, different charge currents can be set for the electricity price periods with different duration to implement the optimal benefit-to-life ratio of the battery.

With reference to the first aspect, in some implementations of the first aspect, when the first charging information and the second charging information include the charging currents, a first charging current and a second charging current meet the following conditions: $I_1 = Min(P*M, L/48V/time_1)$, and $I_2 = Min(P*M, L/48V/time_2)$. $Min()$ represents an operation of obtaining a minimum value, * represents a multiplication sign, $C_1$ represents the first charging rate, $P$ represents predicted discharged energy of the battery pack, $M$ represents a threshold of the battery pack, $L$ represents rated energy of the battery pack, $time_1$ represents the duration of the first electricity price period, $C_2$ represents the second charging rate, and $time_2$ represents the duration of the second electricity price period. Based on the foregoing technical solutions, different charge currents can be set for the electricity price periods with different duration to implement the optimal benefit-to-life ratio of the battery.

With reference to the first aspect, in some implementations of the first aspect, the first electricity price period and the second electricity price period are valley electricity price periods. Based on the foregoing technical solutions, different charge currents can be set for the electricity price periods with different duration to implement the optimal benefit-to-life ratio of the battery.

With reference to the first aspect, in some implementations of the first aspect, the controller is further configured to: when determining that the energy storage apparatus enters the first electricity price period, adjust a charge current limit point of the energy storage apparatus to a first specified value, where the first specified value is associated with the first charging information; or when determining that the energy storage apparatus enters the second electricity price period, adjust a charge current limit point of the energy storage apparatus to a second specified value, where the second specified value is associated with the first charging information. Based on the foregoing technical solutions, different charge currents can be set for the electricity price periods with different duration to implement the optimal benefit-to-life ratio of the battery.

With reference to the first aspect, in some implementations of the first aspect, the controller is further configured to: when determining that the energy storage apparatus does not enter the first electricity price period or the second electricity price period, set a charge current limit point of the energy storage apparatus to zero, to prevent the energy storage apparatus from entering a charging state. Based on the foregoing technical solutions, different charge currents can be set for the electricity price periods with different duration to implement the optimal benefit-to-life ratio of the battery.

With reference to the first aspect, in some implementations of the first aspect, the energy storage apparatus further includes a power module. The power module is configured to: receive an alternating current, and convert the alternating current into a direct current for output. The battery pack is configured to store the direct current output by the power module. Based on the foregoing technical solutions, different charge currents can be set for the electricity price periods with different duration to implement the optimal benefit-to-life ratio of the battery.

According to a second aspect, a battery management system is provided, including a cloud management system and the energy storage apparatus according to the first aspect and some implementations of the first aspect. The cloud management system is configured to: obtain a first correspondence and a second correspondence, where the first correspondence is a correspondence between first charging information and a first electricity price period, and the second correspondence is a correspondence between second charging information and a second electricity price period; and send the first correspondence and the second correspondence to a controller.

According to a third aspect, a control method applied to an energy storage apparatus is provided. The energy storage apparatus includes a controller and a battery pack. The battery pack is configured to store electric energy. The method is performed by the controller, and includes: obtaining a first correspondence and a second correspondence, where the first correspondence is a correspondence between first charging information and a first electricity price period, and the second correspondence is a correspondence between second charging information and a second electricity price period; and when it is determined that the energy storage apparatus enters the first electricity price period, controlling the battery pack to be charged based on the first charging information; or when it is determined that the energy storage apparatus enters the second electricity price period, controlling the battery pack to be charged based on the second charging information. The first charging information is different from the second charging information, and the first electricity price period is different from the second electricity price period.

According to the technical solutions provided in this application, the controller obtains the first correspondence and the second correspondence. When determining that the energy storage apparatus enters the first electricity price period, the controller controls the battery pack to be charged based on the first charging information corresponding to the first electricity price period; or when determining that the energy storage apparatus enters the second electricity price period, the controller controls the battery pack to be charged based on the second charging information corresponding to the second electricity price period. Therefore, different charge currents can be set for electricity price periods with different duration to implement an optimal benefit-to-life ratio of a battery.

With reference to the third aspect, in some implementations of the third aspect, the first charging information and the second charging information include any one of the following: charging rates and charging currents. Based on the foregoing technical solutions, different charge currents can be set for the electricity price periods with different duration to implement the optimal benefit-to-life ratio of the battery.

With reference to the third aspect, in some implementations of the third aspect, the first charging information is associated with duration of the first electricity price period, the second charging information is associated with duration of the second electricity price period, and the duration of the first electricity price period and the duration of the second electricity price period are in a unit of an hour. Based on the foregoing technical solutions, different charge currents can be set for the electricity price periods with different duration to implement the optimal benefit-to-life ratio of the battery.

With reference to the third aspect, in some implementations of the third aspect, when the first charging information and the second charging information include the charging rates, a first charging rate and a second charging rate meet the following conditions: $C_1 = Min(P*M, L/48V/time_1/Q)$, and $C_2 = Min(P*M, L/48V/time_2/Q)$. $Min()$ represents an operation of obtaining a minimum value, $*$ represents a multiplication sign, $C_1$ represents the first charging rate, $P$ represents predicted discharged energy of the battery pack, $M$ represents a threshold of the battery pack, $L$ represents rated energy of the battery pack, $time_1$ represents the duration of the first electricity price period, $Q$ represents a rated capacity of the battery pack, $C_2$ represents the second charging rate, and $time_2$ represents the duration of the second electricity price period. Based on the foregoing technical solutions, different charge currents can be set for the electricity price periods with different duration to implement the optimal benefit-to-life ratio of the battery.

With reference to the third aspect, in some implementations of the third aspect, when the first charging information and the second charging information include the charging currents, a first charging current and a second charging current meet the following conditions: $I_1 = Min(P*M, L/48V/time_1)$, and $I_2 = Min(P*M, L/48V/time_2)$. $Min()$ represents an operation of obtaining a minimum value, $*$ represents a multiplication sign, $C_1$ represents the first charging rate, $P$ represents predicted discharged energy of the battery pack, $M$ represents a threshold of the battery pack, $L$ represents rated energy of the battery pack, $time_1$ represents the duration of the first electricity price period, $C_2$ represents the second charging rate, and $time_2$ represents the duration of the second electricity price period. Based on the foregoing technical solutions, different charge currents can be set for the electricity price periods with different duration to implement the optimal benefit-to-life ratio of the battery.

With reference to the third aspect, in some implementations of the third aspect, the first electricity price period and the second electricity price period are valley electricity price periods. Based on the foregoing technical solutions, different charge currents can be set for the electricity price periods with different duration to implement the optimal benefit-to-life ratio of the battery.

With reference to the third aspect, in some implementations of the third aspect, the method further includes: when it is determined that the energy storage apparatus enters the first electricity price period, adjusting a charge current limit point of the energy storage apparatus to a first specified value, where the first specified value is associated with the first charging information; or when it is determined that the energy storage apparatus enters the second electricity price period, adjusting a charge current limit point of the energy storage apparatus to a second specified value, where the second specified value is associated with the first charging information. Based on the foregoing technical solutions, different charge currents can be set for the electricity price periods with different duration to implement the optimal benefit-to-life ratio of the battery.

With reference to the third aspect, in some implementations of the third aspect, the method further includes: when it is determined that the energy storage apparatus does not enter the first electricity price period or the second electricity price period, setting a charge current limit point of the energy storage apparatus to zero, to prevent the energy storage apparatus from entering a charging state. Based on the foregoing technical solutions, different charge currents can be set for the electricity price periods with different duration to implement the optimal benefit-to-life ratio of the battery.

With reference to the third aspect, in some implementations of the third aspect, the energy storage apparatus further includes a power module. The power module is configured to: receive an alternating current, and convert the alternating current into a direct current for output. The battery pack is configured to store the direct current output by the power module. Based on the foregoing technical solutions, different charge currents can be set for the electricity price periods with different duration to implement the optimal benefit-to-life ratio of the battery.

According to a fourth aspect, a control method applied to a battery management system is provided. The battery management system includes a cloud management system and an energy storage apparatus. The energy storage apparatus includes a controller and a battery pack. The method includes: The cloud management system obtains a first correspondence and a second correspondence. The first correspondence is a correspondence between first charging information and a first electricity price period, and the second correspondence is a correspondence between second charging information and a second electricity price period. The cloud management system sends the first correspondence and the second correspondence to the controller. The controller executes the control method according to any one of the third aspect and the implementations of the third aspect.

According to the technical solutions according to this application, the cloud management system obtains the first correspondence and the second correspondence, and sends the first correspondence and the second correspondence to the controller. Subsequently, when determining that the energy storage apparatus enters the first electricity price period, the controller controls the battery pack to be charged based on the first charging information corresponding to the first electricity price period; or when determining that the energy storage apparatus enters the second electricity price period, the controller controls the battery pack to be charged based on the second charging information corresponding to the second electricity price period. Therefore, different charge currents can be set for electricity price periods with different duration to implement an optimal benefit-to-life ratio of a battery.

**BRIEF DESCRIPTION OF DRAWINGS**

FIG. 1 is a diagram of setting of a charge current limit point in a valley electricity price period (a low electricity price period) in an existing staggering solution;

FIG. 2 is a diagram of a structure of a battery management system according to an embodiment of this application;

FIG. 3 is a diagram of setting of a charge current limit point in a valley electricity price period (a low electricity price period) according to an embodiment of this application;

FIG. 4 is a diagram of setting of a charge current limit point in a valley electricity price period (a low electricity price period) according to another embodiment of this application; and

FIG. 5 is a schematic flowchart of a control method 500 according to an embodiment of this application.

**DESCRIPTION OF EMBODIMENTS**

The following describes technical solutions of this application with reference to accompanying drawings.

In the descriptions of embodiments of this application, unless otherwise specified, "/" means "or". For example, A/B may represent A or B. In this specification, "and/or" describes only an association relationship between associated objects and represents that three relationships may exist. For example, A and/or B may represent the following three cases: Only A exists, both A and B exist, and only B exists.

Prefix words "first", "second", and the like in embodiments of this application are merely intended to distinguish between different described objects, and impose no limitation on locations, sequences, priorities, quantities, content, or the like of the described objects. Use of prefixes such as ordinal numbers used to distinguish the described objects in embodiments of this application does not constitute a limitation on the described objects. For description of the described objects, refer to the context description in claims or embodiments, and the use of such prefixes should not constitute a redundant limitation. In addition, in description of embodiments, unless otherwise specified, "a plurality of" means two or more.

Reference to "in some embodiments" or the like described in this specification means that one or more embodiments of this application include a specific feature, structure, or characteristic described with reference to embodiments. Therefore, statements such as "in some embodiments" that appear at different places in this specification do not necessarily mean referring to a same embodiment, instead, they mean "one or more but not all of embodiments", unless otherwise specifically emphasized. The terms "include", "contain", "have", and their variants all mean "include but are not limited to", unless otherwise specifically emphasized.

Currently, charging during off-peak hours in a fixed mode is usually used for staggering electricity usage in the industry. To be specific, in a process of the charging during off-peak hours, a charge current limit point is uniformly set for all-day charging. FIG. 1 is a diagram of setting of a charge current limit point in a valley electricity price period (a low electricity price period) in an existing staggering solution.

As shown in FIG. 1, a same charge current limit point is set in both a time period from 11:00 to 13:00 and a time period from 22:00 to 08:00. For example, in the time period from 11:00 to 13:00, there are only two hours, and the charge current limit point is set, so that a battery is fully charged within the two hours at a charging rate of 0.5C. However, in the time period from 22:00 to 08:00, there are 10 hours, and the same charge current limit point is set, so that the battery can also be fully charged within two hours at the charging rate of 0.5C.

However, with reference to charging characteristics of the battery, a smaller charging current has less impact on a lifespan of the battery, and it is unreasonable to set a same charge current limit point for periods with different duration. Therefore, how to set different charging rates based on duration of different charging periods to implement an optimal benefit-to-life ratio of the battery becomes an urgent problem to be resolved.

Therefore, this application aims to provide an energy storage apparatus, so that different charging rates can be set based on the duration of different charging periods, thereby implementing the optimal benefit-to-life ratio of the battery.

Before embodiments of this application are described, technical terms in this application are first described in detail.

1. A peak-valley price is also referred to as a time-of-use price, and is an electricity price system that calculates electricity fees based on peak consumption and valley consumption. The peak consumption generally refers to power consumed when customers use the most electricity and power supply is insufficient. For example, in the daytime, a billing rate is high, that is, a high electricity price is usually used for the peak consumption. The valley consumption refers to power consumed when a quantity of customers is small and power supply is sufficient. For example, in the nighttime, a billing rate is low, that is, a valley electricity price is usually used for the valley consumption. Implementation of the peak-valley price helps the customers stagger electricity consumption time, thereby making full use of devices and energy.

2. A charging rate is measure of a charging speed. The charging rate refers to a current value required when a battery is charged to a rated capacity of the battery within specified time. A value of the charging rate is equal to a ratio of a charging current to the rated capacity of the battery.

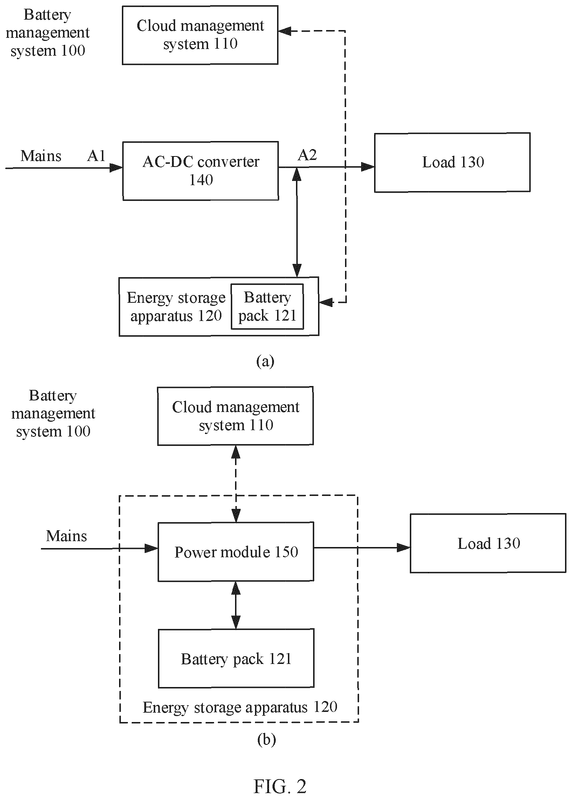

FIG. 2 is a diagram of a structure of a battery management system 100 according to an embodiment of this application. As shown in FIG. 2, the battery management system 100 includes a cloud management system 110 and an energy storage apparatus 120. Specifically, the energy storage apparatus 120 may include a controller and a battery pack 121, and the battery pack 121 is configured to store electric energy.

The battery pack 121 is a component that stores the electric energy in the energy storage apparatus 120, and includes a plurality of electrochemical cells. Therefore, the battery pack 121 may also be referred to as an electrochemical cell group. The electrochemical cell is also referred to as a cell (cell) or a battery electrochemical cell, and is a basic element that forms the electrochemical cell group. Capacities and provided voltages of a same type of electrochemical cells are usually considered to be the same. The battery pack 121 is connected to a direct current bus via a direct current conversion circuit (not shown in the figure), and the direct current bus is configured to connect to a power grid or a load 130.

As shown in (a) in FIG. 2, the energy storage system may further include an alternating current-direct current AC-DC converter 140. The AC-DC converter 140 is configured to: receive mains, and convert the mains into a direct current for output. For example, the AC-DC converter 140 includes a first end A1 and a second end A2, the first end A1 is configured to receive the mains (alternating current), and the second end A2 is configured to connect to the load 130. The AC-DC converter 140 may implement alternating current-direct current conversion in a direction from the first end A1 to the second end A2, and transmit the direct current obtained through conversion to the load 130, to supply power to the load 130.

Optionally, the second end A2 of the AC-DC converter 140 may be further configured to connect to an interface of the energy storage apparatus 120, to output the direct current to the energy storage apparatus 120. In this case, the energy storage apparatus 120 stores the received direct current. For example, in a valley consumption period, the energy storage apparatus 120 may store the direct current output by the AC-DC converter 140. In a peak consumption period, the energy storage apparatus 120 may also output the stored direct current to the load 130, to supply power to the load 130.

Optionally, the AC-DC converter 140 may be located in a power module 150.

Optionally, the load 130 may be a load, for example, a terminal or an electric vehicle, that requires a direct current input. It should be understood that this is not limited in this application.

Optionally, in a possible implementation, the energy storage apparatus 120 may also include the power module 150. As shown in (b) in FIG. 2, the power module 150 is configured to convert the alternating current into the direct current. Specifically, the power module 150 is configured to: receive the mains, convert the mains into the direct current, and output the direct current to the load 130 and the battery pack 121. The battery pack 121 is configured to store the electric energy. For example, the power module 150 may be the AC-DC converter 140.

Optionally, the power module 150 may further include a direct current-direct current DC-DC converter. For example, the AC-DC converter 140 in the power module 150 converts the mains into a first direct current for output. The DC-DC converter is configured to: receive the first direct current output by the AC-DC converter 140, and perform voltage conversion on the first direct current to obtain a second direct current for output.

It should be noted that, in this embodiment of this application, the controller is configured to implement internal control and management of the energy storage apparatus 120, and finally implement an external power supply function or an internal charging function of the energy storage apparatus 120, so that an output voltage of the energy storage apparatus 120 can adapt to electric power devices of a plurality of rated operating voltage specifications.

For example, the controller may be various hardware chips having a processing function, for example, a micro control unit (micro control unit, MCU), or may be at least one of the following: an application-specific integrated circuit (application-specific integrated circuit, ASIC), a programmable logic device (programmable logic device, PLD), and single-chip microcomputer. The PLD may be a complex programmable logic device (complex programmable logic device, CPLD), a field programmable logic gate array (field programmable gate array, FPGA), generic array logic (generic array logic, GAL), or any combination thereof.

It should be further noted that, in a case in which the energy storage apparatus 120 includes the power module 150, the controller may be located in the power module 150, or may be located in a module other than the power module 150 in the energy storage apparatus 120. For example, the controller may alternatively be located in the battery pack 121. It should be understood that this is not limited in embodiments of this application.

Further, in this embodiment of this application, the controller is configured to obtain a first correspondence and a second correspondence.

Specifically, the first correspondence is a correspondence between first charging information and a first electricity price period, and the second correspondence is a correspondence between second charging information and a second electricity price period. The first charging information is different from the second charging information, and the first electricity price period is different from the second electricity price period.

It should be noted that both the first electricity price period and the second electricity price period are valley electricity price periods (or may also be referred to as low electricity price periods). It should be understood that the valley electricity price period (low electricity price period) means that an electricity price in the period is lower than a preset electricity price. For ease of understanding, in the following embodiments, the valley electricity price period (low electricity price period) is uniformly referred to as the electricity price period for description.

It should be noted that the low electricity price period in this embodiment of this application is merely an example. In actual application, the preset electricity price may be set based on a specific market condition. Correspondingly, the low electricity price period is not limited to the foregoing period. It should be understood that this is not limited in embodiments of this application.

It should be further noted that, in this embodiment of this application, the controller may obtain a plurality of correspondences (for example, N correspondences, where $N \geq 1$), which are not limited to the first correspondence and the second correspondence described above. Table 1 shows the plurality of correspondences provided in this embodiment of this application.

**Table 1 Correspondence between charging information and an electricity price** period

| Correspondence 1 | Electricity price period 1 | Charging information 1 |
|---|---|---|
| Correspondence 2 | Electricity price period 2 | Charging information 2 |
| Correspondence 3 | Electricity price period 3 | Charging information 3 |
| ... | ... | ... |
| Correspondence n | Electricity price period n | Charging information n |

The controller obtaining the first correspondence and the second correspondence may be understood as the following two implementations.

For example, in a possible implementation, the cloud management system 110 may obtain electric information, where the electric information may include a historical electricity price trend. The cloud management system 110 may determine the electricity price period based on the historical electricity price trend and the electric information. Further, charging information corresponding to different electricity price periods is obtained through calculation based on duration corresponding to different electricity price periods and related information of the energy storage apparatus 120. In other words, the cloud management system 110 obtains a one-to-one correspondence between a plurality of pieces of charging information and a plurality of valley electricity price periods through calculation.

Subsequently, the cloud management system 110 sends the plurality of correspondences to the controller in the energy storage apparatus 120 via a communication port. Correspondingly, the controller obtains the plurality of correspondences (including the first correspondence and the second correspondence described above). For example, the plurality of correspondences may be transmitted to the controller by the cloud management system 110 in a manner of an electricity price table.

For example, in a possible implementation, a skilled person may obtain electric information, and determine the electricity price period based on a historical electricity price trend and the electric information. Further, charging information corresponding to different electricity price periods is obtained through calculation based on duration corresponding to different electricity price periods and related information of the energy storage apparatus 120. In other words, the skilled person may obtain a one-to-one correspondence between a plurality of pieces of charging information and a plurality of valley electricity price periods through calculation.

Subsequently, the skilled person may transmit the plurality of correspondences to the controller in the energy storage apparatus 120. Correspondingly, the controller obtains the plurality of correspondences (including the first correspondence and the second correspondence described above). For example, the plurality of correspondences may be transmitted to the controller in a manner of an electricity price table.

Specifically, in this embodiment of this application, the first charging information is associated with duration of the first electricity price period, the second charging information is associated with duration of the second electricity price period, and the duration of the first electricity price period and the duration of the second electricity price period are in a unit of an hour.

Optionally, in a possible implementation, when determining that the energy storage apparatus 120 enters the first electricity price period, the controller is configured to control the battery pack 121 to be charged based on the first charging information.

Optionally, in another possible implementation, when determining that the energy storage apparatus 120 enters the second electricity price period, the controller is configured to control the battery pack 121 to be charged based on the second charging information.

Specifically, the first charging information and the second charging information may be charging rates or charging currents. For example, the first charging information may be a first charging rate or a first charging current, and the second charging information may be a second charging rate or a second charging current.

Optionally, when the charging information is the charging rate, the first charging rate and the duration of the first electricity price period meet the following formula (1), and the second charging rate and the duration of the second electricity price period meet the following formula (2):

$$C_1 = 1 / time_1 \quad \text{formula (1)}$$

$$C_2 = 1 / time_2 \quad \text{formula (2)}$$

$C_1$ represents the first charging rate, $time_1$ represents the duration of the first electricity price period, $C_2$ represents the second charging rate, and $time_2$ represents the duration of the second electricity price period.

It can be learned from the foregoing formulas (1) and (2) that the charging rate is inversely proportional to the duration of the electricity price period. To be specific, shorter duration of the electricity price period indicates a higher charging rate, and longer duration of the electricity price period indicates a lower charging rate. Therefore, when charging duration is long, the battery pack 121 may be controlled to be charged at a low charging rate, to improve a lifespan of the battery pack 121.

Optionally, when the charging information is the charging rate, the first charging rate and the duration of the first electricity price period meet the following formula (3), and the second charging rate and the duration of the second electricity price period meet the following formula (4):

$$C_1 = Min(P * M, L / 48V / time_1 / Q) \quad \text{formula (3)}$$

$$C_2 = Min(P * M, L / 48V / time_2 / Q) \quad \text{formula (4)}$$

$Min()$ represents an operation of obtaining a minimum value, * represents a multiplication sign, $C_1$ represents the first charging rate, P represents predicted discharged energy of the battery pack, M represents a threshold of the battery pack, L represents rated energy of the battery pack, $time_1$ represents the duration of the first electricity price period, Q represents a rated capacity of the battery pack, $C_2$ represents the second charging rate, and $time_2$ represents the duration of the second electricity price period. Optionally, a value of M may be in a value range of 0.9 to 0.95. It should be understood that this application is merely an example.

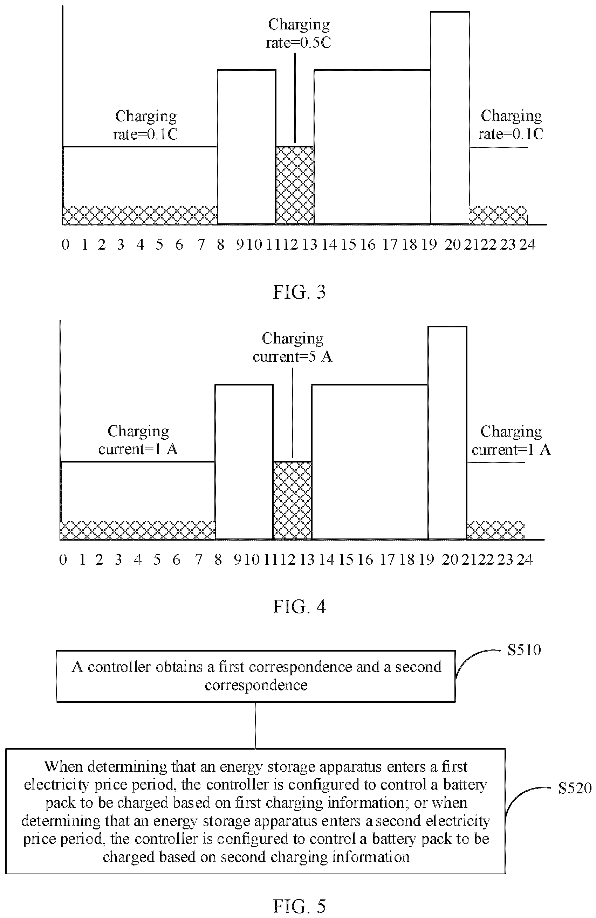

For example, as shown in FIG. 3, when the first electricity price period is from 11:00 to 13:00, it may be obtained through calculation according to the foregoing formula (1) that the first charging rate is 1/2=0.5C. To be specific, when determining that the energy storage apparatus 120 enters the electricity price period from 11:00 to 13:00, the controller controls the battery pack 121 to be charged at a speed of the first charging rate (0.5C). When the second electricity price period is from 22:00 to 08:00, it may be obtained through calculation according to the foregoing formula (2) that the second charging rate is 1/10=0.1C. To be specific, when determining that the energy storage apparatus 120 enters the electricity price period from 22:00 to 08:00, the controller controls the battery pack 121 to be charged at a speed of the second charging rate (0.1C).

Optionally, when determining that the energy storage apparatus 120 enters the first electricity price period, the controller adjusts a charge current limit point of the energy storage apparatus 120 to a first specified value, where the first specified value is associated with the first charging rate. Specifically, the first specified value = the first charging rate × the rated capacity of the battery pack 121.

For example, when the first electricity price period is from 11:00 to 13:00, the first charging rate is 1/2=0.5C. For example, the rated capacity of the battery pack 121 is 10 Ah. In this case, the first specified value is 5 A.

Optionally, when determining that the energy storage apparatus 120 enters the second electricity price period, the controller adjusts a charge current limit point of the energy storage apparatus 120 to a second specified value, where the second specified value is associated with the second charging rate. Specifically, the second specified value = the second charging rate × the rated capacity of the battery pack 121.

For example, when the second electricity price period is from 22:00 to 08:00, the second charging rate is 1/10=0.1C. For example, the rated capacity of the battery pack 121 is 10 Ah. In this case, the first specified value is 1 A.

Optionally, when the charging information is the charging current, the first charging current and the duration of the first electricity price period meet the following formula (5), and the second charging current and the duration of the second electricity price period meet the following formula (6):

$$C_1 = (1/time_1) * Q \quad \text{formula (5)}$$

$$C_2 = (1/time_2) * Q \quad \text{formula (6)}$$

* represents a multiplication sign, $C_1$ represents the first charging rate, $time_1$ represents the duration of the first electricity price period, $Q$ represents a rated capacity of the battery pack, $C_2$ represents the second charging rate, and $time_2$ represents the duration of the second electricity price period.

It can be learned from the foregoing formulas (5) and (6) that shorter duration of the electricity price period indicates a higher charging current, and longer duration of the electricity price period indicates a lower charging current. Therefore, when charging duration is long, the battery pack 121 may be controlled to be charged at a low charging current, to improve a lifespan of the battery pack 121.

Optionally, when the charging information is the charging current, the first charging current and the duration of the first electricity price period meet the following formula (7), and the second charging current and the duration of the second electricity price period meet the following formula (8):

$$I_1 = Min(P * M, L/48V/time_1) \quad \text{formula (7)}$$

$$I_2 = Min(P * M, L/48V/time_2) \quad \text{formula (8)}$$

$Min()$ represents an operation of obtaining a minimum value, * represents a multiplication sign, $C_1$ represents the first charging rate, P represents predicted discharged energy of the battery pack, M represents a threshold of the battery pack, L represents rated energy of the battery pack, $time_1$ represents the duration of the first electricity price period, $C_2$ represents the second charging rate, and $time_2$ represents the duration of the second electricity price period. Optionally, a value of M may be in a value range of 0.9 to 0.95. It should be understood that this application is merely an example.

For example, a rated capacity of the battery pack 121 is 10 Ah.

Refer to FIG. 4. When the first electricity price period is from 11:00 to 13:00, it may be obtained through calculation according to the foregoing formula (5) that the first charging current is (1/2)×10=5 A. To be specific, when determining that the energy storage apparatus 120 enters the electricity price period from 11:00 to 13:00, the controller controls the battery pack 121 to be charged at a current magnitude of the first charging current (5 A). When the second electricity price period is from 22:00 to 08:00, it may be obtained through calculation according to the foregoing formula (6) that the second charging current is (1/10)×10=1 A. To be specific, when determining that the energy storage apparatus 120 enters the electricity price period from 22:00 to 08:00, the controller controls the battery pack 121 to be charged at a current magnitude of the second charging current (1 A).

Optionally, when determining that the energy storage apparatus 120 enters the first electricity price period, the controller adjusts a charge current limit point of the energy storage apparatus 120 to a first specified value, where the first specified value is associated with the first charging rate. Specifically, the first specified value is equal to the first charging current.

For example, when the first electricity price period is from 11:00 to 13:00, the first charging current is (1/2)×10=5 A. In this case, the first specified value is 5 A.

Optionally, when determining that the energy storage apparatus 120 enters the second electricity price period, the controller adjusts a charge current limit point of the energy storage apparatus 120 to a second specified value, where the second specified value is associated with the second charging rate. Specifically, the second specified value is equal to the second charging current.

For example, when the second electricity price period is from 22:00 to 08:00, the second charging current is $(1/10) \times 10 = 1$ A. In this case, the first specified value is 1 A.

Optionally, in a possible implementation, the controller is further configured to: when determining that the first electricity price period ends, set the charge current limit point of the energy storage apparatus 120 to zero, to prevent the energy storage apparatus 120 from entering a charging state, or when determining that the second electricity price period ends, set the charge current limit point of the energy storage apparatus 120 to zero, to prevent the energy storage apparatus 120 from entering a charging state.

Optionally, in a possible implementation, the controller is further configured to: when determining that the energy storage apparatus 120 does not enter the first electricity price period or the second electricity price period, set the charge current limit point of the energy storage apparatus 120 to zero, to prevent the energy storage apparatus 120 from entering a charging state.

For example, when the energy storage apparatus 120 enters a high electricity price period, the charge current limit point of the energy storage apparatus 120 is set to zero.

It should be understood that the high electricity price period (including a peak electricity price period) means that an electricity price in the period is higher than the preset electricity price.

According to the foregoing technical solutions, when determining that the energy storage apparatus enters the first electricity price period, the controller controls the battery pack to be charged based on the first charging information corresponding to the first electricity price period; or when determining that the energy storage apparatus enters the second electricity price period, the controller controls the battery pack to be charged based on the second charging information corresponding to the second electricity price period. Therefore, different charge currents can be set for electricity price periods with different duration to implement an optimal benefit-to-life ratio of a battery.

Based on a same inventive concept, an embodiment of this application further provides a control method applied to an energy storage apparatus. FIG. 5 is a schematic flowchart of a control method applied to an energy storage apparatus according to an embodiment of this application. The energy storage apparatus includes a controller and a battery pack. It should be noted that for related descriptions of the energy storage apparatus, refer to the foregoing descriptions. Details are not described herein again. As shown in FIG. 5, the method includes step S510 and step S520. The following describes this embodiment of this application in detail with reference to step S510 and step S520.

S510: The controller obtains a first correspondence and a second correspondence.

S520: When determining that the energy storage apparatus enters a first electricity price period, the controller is configured to control the battery pack to be charged based on first charging information; or when determining that the energy storage apparatus enters a second electricity price period, the controller is configured to control the battery pack to be charged based on second charging information.

Specifically, the first correspondence is a correspondence between the first charging information and the first electricity price period, and the second correspondence is a correspondence between the second charging information and the second electricity price period. The first charging information is different from the second charging information, and the first electricity price period is different from the second electricity price period.

It should be noted that both the first electricity price period and the second electricity price period are valley electricity price periods (or may also be referred to as low electricity price periods). It should be understood that the valley electricity price period (low electricity price period) means that an electricity price in the period is lower than a preset electricity price. For ease of understanding, in the following embodiments, the electricity price period is uniformly used to replace the valley electricity price period (low electricity price period) for description.

It should be noted that the low electricity price period in this embodiment of this application is merely an example. In actual application, the preset electricity price may be set based on a specific market condition. Correspondingly, the low electricity price period is not limited to the foregoing period. It should be understood that this is not limited in embodiments of this application.

That the controller obtains the first correspondence and the second correspondence may be understood as the following two implementations.

For example, in a possible implementation, a cloud management system may obtain electric information, where the electric information may include a historical electricity price trend. The cloud management system may determine the electricity price period based on the historical electricity price trend and the electric information. Further, charging information corresponding to different electricity price periods is obtained through calculation based on duration corresponding to different electricity price periods and related information of the energy storage apparatus. In other words, the cloud management system obtains a one-to-one correspondence between a plurality of pieces of charging information and a plurality of valley electricity price periods through calculation.

Subsequently, the cloud management system sends a plurality of correspondences to the controller in the energy storage apparatus via a communication port. Correspondingly, the controller obtains the plurality of correspondences (including the first correspondence and the second correspondence described above). For example, the plurality of correspondences may be transmitted to the controller by the cloud management system in a manner of an electricity price table.

For example, in a possible implementation, a skilled person may obtain electric information, and determine the electricity price period based on a historical electricity price trend and the electric information. Further, charging information corresponding to different electricity price periods is obtained through calculation based on duration corresponding to different electricity price periods and related information of the energy storage apparatus. In other words, the skilled person may obtain a one-to-one correspondence between a plurality of pieces of charging information and a plurality of valley electricity price periods through calculation.

Subsequently, the skilled person may transmit the plurality of correspondences to the controller in the energy storage apparatus. Correspondingly, the controller obtains the plurality of correspondences (including the first correspondence and the second correspondence described above). For example, the plurality of correspondences may be transmitted to the controller in a manner of an electricity price table.

Specifically, in this embodiment of this application, the first charging information is associated with duration of the first electricity price period, the second charging information is associated with duration of the second electricity price period, and the duration of the first electricity price period and the duration of the second electricity price period are in a unit of an hour.

It should be noted that the foregoing step S520 includes different corresponding implementations in which the energy storage apparatus enters different electricity price periods. The following describes step S520 in detail with reference to possible implementations.

Optionally, in a possible implementation, when determining that the energy storage apparatus enters the first electricity price period, the controller is configured to control the battery pack to be charged based on the first charging information.

Optionally, in another possible implementation, when determining that the energy storage apparatus enters the second electricity price period, the controller is configured to control the battery pack to be charged based on the second charging information.

Specifically, the first charging information and the second charging information may be charging rates or charging currents. For example, the first charging information may be a first charging rate or a first charging current, and the second charging information may be a second charging rate or a second charging current.

Optionally, when the charging information is the charging rate, the first charging rate and the duration of the first electricity price period meet the foregoing formula (1), and the second charging rate and the duration of the second electricity price period meet the foregoing formula (2).

It can be learned from the foregoing formulas (1) and (2) that the charging rate is inversely proportional to the duration of the electricity price period. To be specific, shorter duration of the electricity price period indicates a higher charging rate, and longer duration of the electricity price period indicates a lower charging rate. Therefore, when charging duration is long, the battery pack may be controlled to be charged at a low charging rate, to improve a lifespan of the battery pack.

Optionally, when the charging information is the charging rate, the first charging rate and the duration of the first electricity price period meet the foregoing formula (3), and the second charging rate and the duration of the second electricity price period meet the foregoing formula (4).

Optionally, when the charging information is the charging current, the first charging current and the duration of the first electricity price period meet the foregoing formula (5), and the second charging current and the duration of the second electricity price period meet the foregoing formula (6).

It can be learned from the foregoing formulas (5) and (6) that shorter duration of the electricity price period indicates a higher charging current, and longer duration of the electricity price period indicates a lower charging current. Therefore, when charging duration is long, the battery pack may be controlled to be charged at a low charging current, to improve a lifespan of the battery pack.

Optionally, when the charging information is the charging current, the first charging current and the duration of the first electricity price period meet the foregoing formula (7), and the second charging current and the duration of the second electricity price period meet the foregoing formula (8).

It should be noted that for related descriptions of the formula (1) to the formula (8), refer to the foregoing descriptions. For brevity, details are not described herein again.

Optionally, in a possible implementation, the controller is further configured to: when determining that the first electricity price period ends, set a charge current limit point of the energy storage apparatus to zero, to prevent the energy storage apparatus from entering a charging state, or when determining that the second electricity price period ends, set a charge current limit point of the energy storage apparatus to zero, to prevent the energy storage apparatus from entering a charging state.

Optionally, in a possible implementation, the controller is further configured to: when determining that the energy storage apparatus does not enter the first electricity price period or the second electricity price period, set a charge current limit point of the energy storage apparatus to zero, to prevent the energy storage apparatus from entering a charging state.

For example, when the energy storage apparatus enters a high electricity price period, the charge current limit point of the energy storage apparatus is set to zero.

It should be understood that the high electricity price period (including a peak electricity price period) means that an electricity price in the period is higher than the preset electricity price.

According to the foregoing technical solutions, when determining that the energy storage apparatus enters the first electricity price period, the controller controls the battery pack to be charged based on the first charging information corresponding to the first electricity price period; or when determining that the energy storage apparatus enters the second electricity price period, the controller controls the battery pack to be charged based on the second charging information corresponding to the second electricity price period. Therefore, different charge currents can be set for electricity price periods with different duration to implement an optimal benefit-to-life ratio of a battery.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (read-only memory, ROM), a random access memory (random access memory, RAM), a magnetic disk, an optical disc, or the like that can store program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An energy storage apparatus, wherein the energy storage apparatus comprises a controller and a battery pack;

> the battery pack is configured to store electric energy; and
> the controller is configured to:

>> obtain a first correspondence and a second correspondence, wherein the first correspondence is a correspondence between first charging information and a first electricity price period, and the second correspondence is a correspondence between second charging information and a second electricity price period; and

when determining that the energy storage apparatus enters the first electricity price period, control the battery pack to be charged based on the first charging information; or

when determining that the energy storage apparatus enters the second electricity price period, control the battery pack to be charged based on the second charging information, wherein

the first charging information is different from the second charging information, and the first electricity price period is different from the second electricity price period.

2. The energy storage apparatus according to claim 1, wherein the first charging information and the second charging information comprise any one of the following:

charging rates and charging currents.

3. The energy storage apparatus according to claim 1 or 2, wherein

the first charging information is associated with duration of the first electricity price period, the second charging information is associated with duration of the second electricity price period, and the duration of the first electricity price period and the duration of the second electricity price period are in a unit of an hour.

4. The energy storage apparatus according to any one of claims 1 to 3, wherein when the first charging information and the second charging information comprise the charging rates, a first charging rate and a second charging rate meet the following conditions:

$$C_1 = Min(P * M, L / 48V / time_1 / Q),$$

and

$$C_2 = Min(P * M, L / 48V / time_2 / Q),$$

wherein $Min()$ represents an operation of obtaining a minimum value, * represents a multiplication sign, $C_1$ represents the first charging rate, $P$ represents predicted discharged energy of the battery pack, $M$ represents a threshold of the battery pack, $L$ represents rated energy of the battery pack, $time_1$ represents the duration of the first electricity price period, $Q$ represents a rated capacity of the battery pack, $C_2$ represents the second charging rate, and $time_2$ represents the duration of the second electricity price period.

5. The energy storage apparatus according to any one of claims 1 to 3, wherein when the first charging information and the second charging information comprise the charging currents, a first charging current and a second charging current meet the following conditions:

$$I_1 = Min(P * M, L / 48V / time_1),$$

and

$$I_2 = Min(P * M, L / 48V / time_2),$$

wherein $Min()$ represents an operation of obtaining a minimum value, * represents a multiplication sign, $C_1$ represents the first charging rate, $P$ represents predicted discharged energy of the battery pack, $M$ represents a threshold of the battery pack, $L$ represents rated energy of the battery pack, $time_1$ represents the duration of the first electricity price period, $C_2$ represents the second charging rate, and $time_2$ represents the duration of the second electricity price period.

6. The energy storage apparatus according to any one of claims 1 to 5, wherein the first electricity price period and the second electricity price period are valley electricity price periods.

7. The energy storage apparatus according to any one of claims 1 to 6, wherein the controller is further configured to:

when determining that the energy storage apparatus enters the first electricity price period, adjust a charge current limit point of the energy storage apparatus to a first specified value, wherein the first specified value is associated with the first charging information; or

when determining that the energy storage apparatus enters the second electricity price period, adjust a charge current limit point of the energy storage apparatus to a second specified value, wherein the second specified value is associated with the first charging information.

8. The energy storage apparatus according to any one of claims 1 to 6, wherein the controller is further configured to: when determining that the energy storage apparatus does not enter the first electricity price period or the second electricity price period, set a charge current limit point of the energy storage apparatus to zero, to prevent the energy storage apparatus from entering a charging state.

9. The energy storage apparatus according to any one of claims 1 to 8, wherein the energy storage apparatus further comprises a power module; the power module is configured to: receive an alternating current, and convert the alternating current into a direct current for output; and the battery pack is configured to store the direct current output by the power module.

10. A battery management system, comprising a cloud management system and the energy storage apparatus according to any one of claims 1 to 9, wherein the cloud management system is configured to:

obtain a first correspondence and a second correspondence, wherein the first correspondence is a correspondence between first charging information and a first electricity price period, and the second correspondence is a correspondence between second charging information and a second electricity price period; and
send the first correspondence and the second correspondence to a controller

11. A control method applied to an energy storage apparatus, wherein the energy storage apparatus comprises a controller and a battery pack, and the battery pack is configured to store electric energy; and
the method is performed by the controller, and comprises:

obtaining a first correspondence and a second correspondence, wherein the first correspondence is a correspondence between first charging information and a first electricity price period, and the second correspondence is a correspondence between second charging information and a second electricity price period; and
when it is determined that the energy storage apparatus enters the first electricity price period, controlling the battery pack to be charged based on the first charging information; or
when it is determined that the energy storage apparatus enters the second electricity price period, controlling the battery pack to be charged based on the second charging information, wherein
the first charging information is different from the second charging information, and the first electricity price period is different from the second electricity price period.

12. The control method according to claim 11, wherein the first charging information and the second charging information comprise any one of the following:
charging rates and charging currents.

13. The control method according to claim 11 or 12, wherein
the first charging information is associated with duration of the first electricity price period, the second charging information is associated with duration of the second electricity price period, and the duration of the first electricity price period and the duration of the second electricity price period are in a unit of an hour.

14. The control method according to any one of claims 11 to 13, wherein when the first charging information and the second charging information comprise the charging rates, a first charging rate and a second charging rate meet the following conditions:

$$C_1 = Min(P * M, L / 48V / time_1 / Q),$$

and

$$C_2 = Min(P * M, L / 48V / time_2 / Q),$$

wherein $Min()$ represents an operation of obtaining a minimum value, * represents a multiplication sign, $C_1$ represents the first charging rate, $P$ represents predicted discharged energy of the battery pack, $M$ represents a threshold of the battery pack, $L$ represents rated energy of the battery pack, $time_1$ represents the duration of the first electricity price period, $Q$ represents a rated capacity of the battery pack, $C_2$ represents the second charging rate, and $time_2$ represents the duration of the second electricity price period.

15. The control method according to any one of claims 11 to 13, wherein when the first charging information and the second charging information comprise the charging currents, a first charging current and a second charging current meet the following conditions:

$$I_1 = Min(P*M, L/48V/time_1),$$

and

$$I_2 = Min(P*M, L/48V/time_2),\text{`}$$

wherein $Min()$ represents an operation of obtaining a minimum value, * represents a multiplication sign, $C_1$ represents the first charging rate, $P$ represents predicted discharged energy of the battery pack, M represents a threshold of the battery pack, $L$ represents rated energy of the battery pack, $time_1$ represents the duration of the first electricity price period, $C_2$ represents the second charging rate, and $time_2$ represents the duration of the second electricity price period.

FIG. 1

Battery
management
system 100

Cloud management
system 110

Mains  A1  AC-DC converter
140  A2  Load 130

Energy storage
apparatus 120  Battery
pack 121

(a)

Battery
management
system 100

Cloud management
system 110

Mains  Power module 150  Load 130

Battery pack 121

Energy storage apparatus 120

(b)

FIG. 2

Charging
rate=0.5C

Charging
rate=0.1C

Charging
rate=0.1C

0  1  2  3  4  5  6  7  8  9 10 11 12 13 14 15 16 17 18 19  20 21 22 23 24

FIG. 3

Charging
current=5 A

Charging
current=1 A

Charging
current=1 A

0  1  2  3  4  5  6  7  8  9 10 11 12 13 14 15 16 17 18 19  20 21 22 23 24

FIG. 4

A controller obtains a first correspondence and a second correspondence ⟋ S510

When determining that an energy storage apparatus enters a first electricity price period, the controller is configured to control a battery pack to be charged based on first charging information; or when determining that an energy storage apparatus enters a second electricity price period, the controller is configured to control a battery pack to be charged based on second charging information ⟋ S520

FIG. 5

Europäisches
Patentamt

European
Patent Office

Office européen
des brevets

# EUROPEAN SEARCH REPORT

**Application Number**

EP 24 21 4866

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 953 230 A1 (TOSHIBA KK [JP]) 9 December 2015 (2015-12-09) * the whole document * | 1-15 | INV. H02J3/32 H02J7/00 |
| X | US 2020/185958 A1 (KIM KYUNGJAE [KR] ET AL) 11 June 2020 (2020-06-11) * the whole document * | 1-15 | |
| A | US 9 071 068 B2 (NISHIKAWA KAZUFUMI [JP]; OKUDA YASUO [JP] ET AL.) 30 June 2015 (2015-06-30) * the whole document * | 1-15 | |
| A | US 2013/249289 A1 (PATEL PRANAV N [US] ET AL) 26 September 2013 (2013-09-26) * the whole document * | 1-15 | |

**TECHNICAL FIELDS SEARCHED (IPC)**

H02J

The present search report has been drawn up for all claims

| Place of search | Date of completion of the search | Examiner |
|---|---|---|
| Munich | 24 March 2025 | Hunckler, José |

EPO FORM 1503 03.82 (P04C01)

EP 4 560 867 A1

**ANNEX TO THE EUROPEAN SEARCH REPORT
ON EUROPEAN PATENT APPLICATION NO.**　　EP 24 21 4866

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2025

| Patent document cited in search report | | Publication date | Patent family member(s) | | Publication date |
|---|---|---|---|---|---|
| EP 2953230 | A1 | 09-12-2015 | EP | 2953230 A1 | 09-12-2015 |
| | | | JP | 2014150641 A | 21-08-2014 |
| | | | WO | 2014119153 A1 | 07-08-2014 |
| US 2020185958 | A1 | 11-06-2020 | EP | 3871310 A1 | 01-09-2021 |
| | | | KR | 20200070930 A | 18-06-2020 |
| | | | US | 2020185958 A1 | 11-06-2020 |
| | | | WO | 2020122475 A1 | 18-06-2020 |
| US 9071068 | B2 | 30-06-2015 | CN | 102986113 A | 20-03-2013 |
| | | | EP | 2590298 A1 | 08-05-2013 |
| | | | JP | 5485392 B2 | 07-05-2014 |
| | | | JP | 2014131477 A | 10-07-2014 |
| | | | JP | WO2012002429 A1 | 29-08-2013 |
| | | | US | 2013099751 A1 | 25-04-2013 |
| | | | WO | 2012002429 A1 | 05-01-2012 |
| US 2013249289 | A1 | 26-09-2013 | NONE | | |

EPO FORM P0459

For more details about this annex : see Official Journal of the European Patent Office, No. 12/82